# EUROPEAN PATENT APPLICATION

(11) **EP 3 125 387 A1**
(43) Date of publication of application: **01.02.2017**
(21) Application number: 15769936.4
(22) Date of filing: 09.01.2015
(51) Int. Cl.: H02G 15/34, H01B 12/02, H01L 39/04, H02G 15/02

(54) **TERMINAL STRUCTURE FOR SUPERCONDUCTING CABLE**

(30) Priority: 28.03.2014 JP 2014068959
(71) Applicant: Sumitomo Electric Industries, Ltd., Osaka-shi, Osaka 541-0041 (JP)
(72) Inventor: ASHIBE, Yuichi, Osaka-shi Osaka 5540024 (JP); HONJO, Shoichi, Tokyo 1008560 (JP); MARUYAMA, Osamu, Tokyo 1008560 (JP); NAKANO, Tetsutaro, Tokyo 1008560 (JP)
(74) Representative: Desormiere, Pierre-Louis
(86) International application number: PCT/JP2015/050519
(87) International publication number: WO 2015/146220

(57) **Abstract**

A terminal structure for a superconducting cable that is small and more processible is provided. A terminal structure for a superconducting cable includes a cable core exposed from an end of a heat insulation tube of the superconducting cable, a bushing through which part of the core extends, a porcelain tube accommodating a normal-temperature-side region of the bushing, a normal conducting pull-out part to which a superconducting conductor layer included in the core is connected at an end of the core that protrudes from a normal-temperature-side end of the bushing, an inside vacuum layer that is disposed so as to extend from a space between an inner circumference of the bushing and an outer circumference of the core to a normal temperature side via an inside of the porcelain tube and that holds a refrigerant for cooling the superconducting conductor layer while insulating the refrigerant from heat, a cable-side vacuum layer that is disposed so as to extend from an outer circumference of a cable-side region of the bushing to the end of the heat insulation tube, that holds the refrigerant for cooling the superconducting conductor layer while insulating the refrigerant from heat, and that is disposed so as to overlap the inside vacuum layer, and a normal-temperature-side vacuum layer that holds a refrigerant for cooling a joint between the superconducting conductor layer and the normal conducting pull-out part that is disposed outside the porcelain tube while insulating the refrigerant from heat.

## Description

### Technical Field

The present invention relates to a terminal structure for a superconducting cable used for transferring electric power between the superconducting cable and normal conducting electric power equipment such as a normal conducting cable used at a normal temperature. In particular, the present invention relates to a terminal structure for a superconducting cable that is small and more processible.

### Background Art

Superconducting cables allow a larger amount of electric power to be transmitted at a low loss although being small and are accordingly anticipated to be energy saving techniques. A representative superconducting cable includes a cable core including a superconducting conductor layer formed by spirally winding a superconducting wire around the outer circumference of a former and a heat insulation tube that accommodates the core and contains a refrigerant (for example, liquid nitrogen) for maintaining the superconducting conductor layer in the superconducting state.

It has been proposed that, in the case where a superconducting cable and a normal conducting cable used at a normal temperature are connected to each other, a terminal structure in which a pull-out part made of a normal conducting material is interposed between the superconducting conductor layer of the cable core and a conductor of the normal conducting cable is formed. For example, PTL1 discloses a terminal structure including a rod-like connecting conductor connected to the cable core of the superconducting cable, a rod-like terminal conductor whose end portion is disposed under a normal temperature condition, and a joint that connects the conductors to each other. The connecting conductor includes a superconducting wire on the outer circumference of a member made of a normal conducting material. The terminal conductor includes a low-temperature-side member and a normal-temperature-side member that are connected to each other by a connecting sleeve. The low-temperature-side member includes a member made of a normal conducting material and a superconducting wire as in the connecting conductor and is connected to the connecting conductor with the joint interposed therebetween. The normal-temperature-side member is composed of only a normal conducting material and corresponds to the above pull-out part.

The terminal structure disclosed in PTL1 includes a body case including a refrigerant tank that accommodates the connecting conductor and the low-temperature-side member and a vacuum heat insulation tank that covers the outer circumference thereof, a porcelain tube disposed on the body case, and a cylindrical bushing (insulation portion) including a built-in heat insulation tube in which the terminal conductor is inserted and disposed. The bushing and the built-in heat insulation tube are disposed so as to extend from the refrigerant tank of the body case to the inside of the porcelain tube via the vacuum heat insulation tank. An end of the built-in heat insulation tube protrudes from the porcelain tube and a heat insulation portion composed of a heat insulating material such as a urethane resin is disposed on the outer circumference thereof.

### Citation List

### Patent Literature

PTL 1: Japanese Unexamined Patent Application Publication No. 2005-341767

### Summary of Invention

### Technical Problem

It is desirable to downsize the terminal structure for a superconducting cable. It is also desirable to improve processibility of the terminal structure for a superconducting cable.

A terminal structure including intervening members (such as the connecting conductor, the low-temperature-side member of the terminal conductor, and the joint) between the superconducting cable and the pull-out part is likely to become large. In addition, the body case is essential to cool the superconducting wire included in the intervening members but the body case itself is large. The terminal structure is large also because of including such large components. In some cases, such a large terminal structure is difficult to form depending on a processing space. In consideration for securing the processing space, it is desirable to downsize the terminal structure.

The terminal structure that connects the intervening members has many connecting steps and it is desirable to improve its processibility. In particular, in the case of the terminal structure including the above large components, the large components are difficult to handle at a processing site and the processibility may be reduced.

The present invention has been made in view of the above circumstances and an object of the present invention is to provide a terminal structure for a superconducting cable that is small and more processible.

### Solution to Problem

A terminal structure for a superconducting cable according to an embodiment of the present invention includes a cable core exposed from an end of a heat insulation tube at an end of the superconducting cable, a bushing through which part of the cable core extends, a porcelain tube accommodating a normal-temperature-side region of the bushing, a normal conducting pull-out part to which a superconducting conductor layer included in the cable core is connected at an end of the cable core that protrudes from a normal-temperature-side end of the bushing, the following inside vacuum layer, cable-side vacuum layer, and normal-temperature-side vacuum layer.

The inside vacuum layer is disposed so as to extend from a space between an inner circumference of the bushing and an outer circumference of the cable core to a normal temperature side via an inside of the porcelain tube and holds a refrigerant for cooling the superconducting conductor layer of the cable core while insulating the refrigerant from heat.

The cable-side vacuum layer is disposed so as to extend from an outer circumference of a cable-side region of the bushing to the end of the heat insulation tube, holds the refrigerant for cooling the superconducting conductor layer of the cable core while insulating the refrigerant from heat, and is disposed so as to overlap the inside vacuum layer.

The normal-temperature-side vacuum layer holds a refrigerant for cooling a joint between the superconducting conductor layer and the normal conducting pull-out part that is disposed outside the porcelain tube while insulating the refrigerant from heat. Advantageous Effects of Invention

The terminal structure for a superconducting cable is small and more processible.

### Brief Description of Drawings

[Fig. 1] Figure 1 is a schematic configuration diagram illustrating a longitudinal section of a terminal structure for a superconducting cable according to a first embodiment.
[Fig. 2] Figure 2 is a schematic configuration diagram illustrating a longitudinal section of an example of an intermediate component, for use in the terminal structure for a superconducting cable according to the first embodiment, which includes a bushing, and an inner tube and an outer tube that form an inside vacuum layer.
[Fig. 3] Figure 3 illustrates a process chart of a procedure for forming the terminal structure for a superconducting cable according to the first embodiment.
[Fig. 4] Figure 4 is a cross-sectional view of an example of a superconducting cable included in the terminal structure for a superconducting cable according to the first embodiment.
[Fig. 5] Figure 5 is a schematic configuration diagram illustrating a longitudinal section of an example of an intermediate component, for use in a terminal structure for a superconducting cable according to a second embodiment, which includes a bushing, and an inner tube and an outer tube that form an inside vacuum layer.
[Fig. 6] Figure 6 illustrates a process chart of a procedure for forming the intermediate component illustrated in Figure 5.

### Description of Embodiments

### [Description of Embodiment of Present Invention]

Aspects of an embodiment of the present invention will be first listed and described.
(1) A terminal structure for a superconducting cable according to an aspect of the embodiment of the present invention includes a cable core exposed from an end of a heat insulation tube at an end of the superconducting cable, a bushing through which part of the cable core extends, a porcelain tube accommodating a normal-temperature-side region of the bushing, a normal conducting pull-out part to which a superconducting conductor layer included in the cable core is connected at an end of the cable core that protrudes from a normal-temperature-side end of the bushing, the following inside vacuum layer, cable-side vacuum layer, and normal-temperature-side vacuum layer.
   The inside vacuum layer is disposed so as to extend from a space between an inner circumference of the bushing and an outer circumference of the cable core to a normal temperature side via an inside of the porcelain tube and holds a refrigerant for cooling the superconducting conductor layer of the cable core while insulating the refrigerant from heat.
   The cable-side vacuum layer is disposed so as to extend from an outer circumference of a cable-side region of the bushing to the end of the heat insulation tube, holds the refrigerant for cooling the superconducting conductor layer of the cable core while insulating the refrigerant from heat, and is disposed so as to overlap the inside vacuum layer.
   The normal-temperature-side vacuum layer holds a refrigerant for cooling a joint between the superconducting conductor layer and the normal conducting pull-out part that is disposed outside the porcelain tube while insulating the refrigerant from heat.
   The terminal structure for a superconducting cable according to the aspect of the embodiment that has the above structure is small for the following reasons (i) and (ii) and more processible for the following reasons (iii) to (v).
   (i) The cable core of the superconducting cable and the normal conducting pull-out part are directly connected to each other without interposing, for example, the intervening members including the superconducting wire, and accordingly, the intervening members and a body case that accommodates these intervening members can be omitted.
   (ii) The bushing is a member independent of the superconducting cable, and accordingly, the outer diameter of a portion of the bushing can be smaller than the outer diameter in the case where the bushing is directly disposed on the outer circumference of the heat insulation tube of the superconducting cable.
   (iii) The above intervening members and the body case are not included and a step of connecting the intervening members and a step of assembling the body case can be omitted.
   (iv) The body case is not included and it is not necessary to handle a large component.
   (v) The joint between the superconducting conductor layer and the normal conducting pull-out part is disposed outside the porcelain tube, and accordingly, the superconducting conductor layer and the normal conducting pull-out part are readily connected to each other.

   Other than these, the terminal structure for a superconducting cable according to the aspect of the embodiment also achieves the following effects.
   (I) The superconducting conductor layer of the cable core extends to the outside of the porcelain tube. Accordingly, a region made of a superconducting conductor through which electricity runs is large (long), and Joule losses are more readily reduced to achieve a low loss compared with the case where members made of a normal conducting material are interposed or there are many joints between members made of a normal conducting material.
   (II) The vacuum layers are caused to overlap between the inside and the outside of the bushing, and accordingly, in the bushing, a normal-temperature-side region disposed in the porcelain tube and a cable-side region in contact with the refrigerant are readily thermally insulated from each other. Consequently, the normal-temperature-side region of the bushing is unlikely to be frosted and degradation in properties for this reason can be suppressed.
(2) An aspect of an example of the terminal structure for a superconducting cable is that an outer tube on which an insulating material of the bushing is disposed and an inner tube that forms a vacuum space of the inside vacuum layer between the inner tube and the outer tube and that contains the refrigerant are included, and a cable-side end of the outer tube and a cable-side end of the inner tube are connected to each other so that a cylindrical shape with a bottom is formed.
   For example, in the case where the inner tube and the outer tube are manufactured into a cylindrical shape with a bottom by using a joining method such as welding that allows excellent airtightness in a factory, the inside vacuum layer can be readily formed in the processing site in a manner in which the interior space of the cylindrical body with the bottom is evacuated. Accordingly, the number of steps in the processing site is smaller than the number of steps in the case where the inner tube and the outer tube are assembled into a cylindrical shape with a bottom in the processing site, and the aspect is excellent in terms of processibility. In addition, in the case where the cylindrical body with the bottom is formed in a factory, an intermediate component including the cylindrical body with the bottom and the bushing is easy to handle. The processibility is excellent also due to this reason.
(3) An aspect of an example of the terminal structure for a superconducting cable is that the inside vacuum layer and the normal-temperature-side vacuum layer are in communication with each other.
   According to the aspect, a space forming the inside vacuum layer and a space forming the normal-temperature-side vacuum layer are continuous with each other, and accordingly, the spaces can be evacuated at the same time. Accordingly, the aspect enables the number of evacuating steps in the processing site to be decreased and is excellent in terms of processibility.
(4) An aspect of an example of the terminal structure for a superconducting cable is that a reinforced insulation layer disposed on an outer circumference of a cable-side region of the cable core is included.

The reinforced insulation layer is disposed independently of the bushing. Accordingly, the degree of freedom of the shape of the bushing can be increased and the length of the bushing can be decreased. The aspect enables further downsizing. In addition, according to the aspect, the reinforced insulation layer and the bushing that are formed into appropriate shapes enable electric field relaxation to be well performed.

### [Detail of Embodiment of Present Invention]

Embodiments of the present invention will be described below in detail with reference to the drawings. In the drawings, same symbols designate components of same names.

### [First Embodiment]

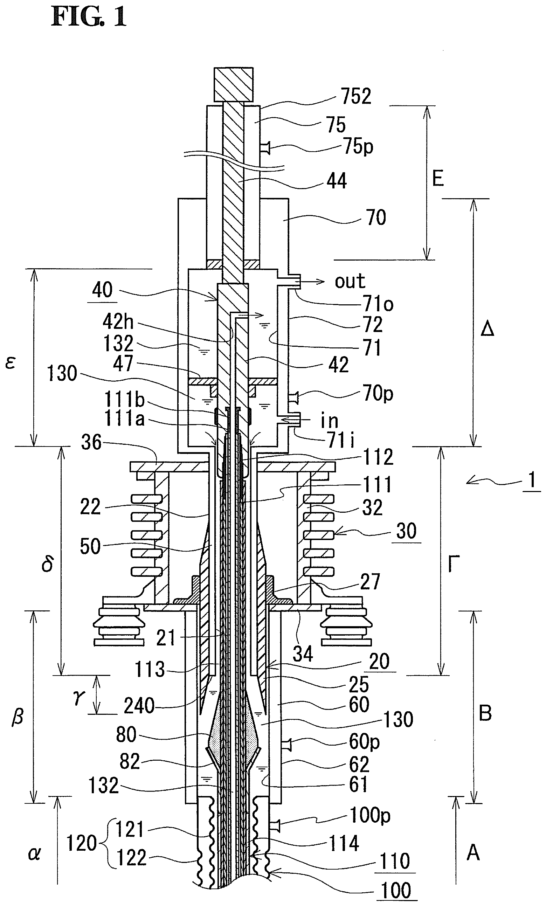

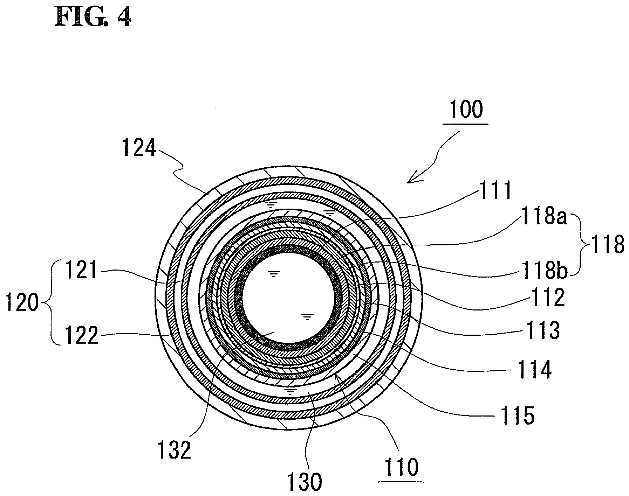

A terminal structure 1 for a superconducting cable according to a first embodiment will be described with reference to Figure 1 to Figure 5. The terminal structure 1 includes a normal conducting pull-out part 40 that electrically connects a superconducting conductor layer 112 included in a cable core 110 of a superconducting cable 100 and a conductor of normal conducting electric power equipment (representatively, a normal conducting cable of, for example, an overhead transmission line, or equipment that forms a transmission path such as a busbar made of a normal conducting material, for example, aluminum or copper, not illustrated) that is used at a normal temperature. One of the features of the terminal structure 1 for a superconducting cable according to the first embodiment is that the superconducting conductor layer 112 and the normal conducting pull-out part 40 are directly connected to each other. In relation to this point, the terminal structure 1 includes a bushing 20 through which part of the core 110, that is, the core 110 itself extends, vacuum layers (an inside vacuum layer 50 and a cable-side vacuum layer 60) that are disposed inside and outside the bushing 20, and a porcelain tube 30 that accommodates an end-side region (normal-temperature-side region) of the bushing 20 and part of the core 110, that is, the core 110 itself. The terminal structure 1 also includes a joint between the superconducting conductor layer 112 and the normal conducting pull-out part 40 outside the porcelain tube 30 and a vacuum layer (normal-temperature-side vacuum layer 70) that covers the joint. The superconducting cable 100 will be first described below with reference to Figure 4, and subsequently, the detailed structure of the terminal structure 1 and a procedure for processing the terminal structure 1 will be described. Effects of the structure will be finally described.

### • Superconducting Cable

The superconducting cable 100 includes the cable core 110 including the superconducting conductor layer 112 disposed on the outer circumference of a former 111 and a cable heat insulation tube 120 that accommodates the core 110. The core 110 described in the embodiment includes the former 111, an intervening layer 118, the superconducting conductor layer 112, an electrical insulation layer 113, a shielding layer 114, and a protective layer 115 concentrically in this order from the center. The cable 100 is a single core cable in which the core 110 is accommodated in the heat insulation tube 120 and a low-temperature-insulation-type cable in which the superconducting conductor layer 112 and the electrical insulation layer 113 are accommodated in the heat insulation tube 120 and cooled with a refrigerant 130. For example, such three single core cables can be placed to form a three phase alternating current transmission path on which the cables are used for transmission of each phase, or such two single core cables can be placed to form a direct current transmission path on which one of the cables is used for an outward path and the other cable is used for a return path.

### ••Cable Core

### •••Former

The former 111 has a function of supporting the superconducting conductor layer 112. In the embodiment, the former 111 is a hollow body because the former 111 is also used as a flow path (return path in the embodiment) for a refrigerant 132. The material of which the former 111 is composed is a metal such as stainless steel, which can be used at a temperature of a refrigerant such as liquid nitrogen and has excellent strength regardless of being thin. In the case where a corrugated pipe or a bellows tube is used as the former 111, the former 111 has excellent flexibility even when being composed of a high-strength material. In the case of a thin tube, the flexibility is more excellent. Here, the former 111 is a bellows tube made of stainless steel. Examples of the other materials include normal conducting materials such as copper, an alloy thereof, aluminum, and an alloy thereof. The former 111 made of a normal conducting material is soft and readily bent and has excellent conductivity. Accordingly, the former 111 can be used, for example, as a flow path for a fault current. Other than these, the former 111 may be a solid body of, for example, a stranded wire made of plural stranded wires (copper wires or copper wires whose outer circumference is coated with an insulator such as enamel).

### •••Intervening Layer

The intervening layer 118 is disposed, for example, in order to mechanically protect the superconducting conductor layer 112. In the embodiment, the intervening layer 118 has a multilayer structure formed of different materials and includes a metallic tape layer 118a obtained by winding a tape made of a metal such as stainless steel and a cushion layer 118b obtained by winding a tape made of an insulating material such as kraft. The metallic tape layer 118a flattens unevenness of the bellows tube and maintains the sectional shape (circular shape) of the bellows tube. The metallic tape layer 118a is disposed right above the former 111 to fully achieve this function. The cushion layer 118b mechanically protects the superconducting conductor layer 112 (protection from damage caused by being rubbed against, for example, the metallic tape layer 118a) and absorbs thermal shrinkage of a metallic member. In the embodiment, the cushion layer 118b also provides electrical insulation between the superconducting conductor layer 112 and the metallic tape layer 118a. Another example of the intervening layer 118 is a normal conducting layer. An example of the normal conducting layer is a layer obtained by winding a braided material formed of a wire of the above normal conducting material. The normal conducting layer can be used, for example, as a flow path for a fault current. The thickness of the intervening layer 118 can be appropriately selected. Adjustment of the thickness of the intervening layer 118 enables, for example, allowable bend radius of the superconducting conductor layer 112 to be ensured. The intervening layer 118 may be omitted.

### •••Superconducting Conductor Layer

The superconducting conductor layer 112 is formed by spirally winding superconducting wires around the outer circumference (right above the intervening layer 118 in the embodiment) of the former 111. For example, tape-like wires such as silver sheathed Bi wires and RE123 film wires can be used as the superconducting wires. The number of the wires and the number of wire layers may be appropriately selected such that the desired amount of power is obtained. Figure 1 illustrates the case where, in the superconducting conductor layer 112, four wire layers are stacked. An insulation interlayer (not illustrated) obtained by winding, for example, insulating paper may be disposed between the wire layers.

### •••Electrical Insulation Layer

The electrical insulation layer 113 provides electrical insulation between the superconducting conductor layer 112 and the outside thereof. The electrical insulation layer 113 is formed by spirally winding a tape made of an insulating material around the outer circumference of the superconducting conductor layer 112. Examples of the insulating material include insulating paper such as semisynthesis paper, for example, kraft or PPLP (registered trademark; Polypropylene Laminated Paper).

### •••Shielding Layer

The shielding layer 114 is disposed on the outer circumference (right above the electrical insulation layer 113 in the embodiment) of the superconducting conductor layer 112 and shields an electric field attributable to the superconducting conductor layer 112. The shielding layer 114 is formed by winding a tape or wire made of the above normal conducting material such as a copper tape.

### •••Protective Layer

The protective layer 115 is disposed on the outermost circumference of the cable core 110 in order to mechanically protect a member (particularly, the superconducting conductor layer 112) disposed inside the protective layer 115 and provide electrical insulation between the shielding layer 114 and the cable heat insulation tube 120. The protective layer 115 is formed by spirally winding the above insulating paper around the outer circumference of the shielding layer 114.

Moreover, the cable core 110 may include an outer superconducting layer (not illustrated) or a magnetic shielding layer made of a normal conducting material on the outer circumference of the electrical insulation layer 113. The outer superconducting layer is formed by spirally winding the above superconducting wires. For example, in the case of alternating current transmission, the outer superconducting layer can be used as the magnetic shielding layer, and, in the case of direct-current transmission, the outer superconducting layer can be used as a return path conductor when the superconducting conductor layer 112 is an outward path conductor for monopole power transmission and can be used as a conductor through which a current having a polarity opposite to the polarity of the current flowing through the superconducting conductor layer 112 flows for bipole power transmission.

### ••Cable Heat Insulation Tube

The cable heat insulation tube 120 is a double structure tube including an inner tube 121 and an outer tube 122 and a vacuum heat insulation tube in which a vacuum heat insulation layer is formed in a space between the inner tube 121 and the outer tube 122 that is evacuated. The interior space of the inner tube 121 is a space in which the cable core 110 is accommodated and is used as a flow path (outward path in the embodiment) through which the refrigerant 130 (for example, liquid nitrogen) for maintaining the superconducting state of the superconducting conductor layer 112 flows. The inner tube 121 and the outer tube 122 are excellent in terms of flexibility when being corrugated pipes or bellows tubes, have small surface areas, are excellent in terms of a thermal insulation property, and can reduce a pressure loss of the refrigerant when being flat tubes. Examples of the materials of which the inner tube 121 and the outer tube 122 are composed include a metal such as stainless steel as described in the section of the former. The heat insulation tube 120 described in the embodiment includes a heat insulating material (not illustrated) such as super insulation (trade name) between the inner tube 121 and the outer tube 122 and has a higher heat insulation property. A corrosion protection layer 124 composed of an anticorrosion material such as vinyl or polyethylene is disposed outside the outer tube 122 of the heat insulation tube 120.

### •Terminal Structure for Superconducting Cable

In the case where the superconducting cable 100 and normal conducting electric power equipment are connected to each other, the terminal structure 1 illustrated in, for example, Figure 1 is formed. Specifically, an end of the cable core 110 is exposed from an end of the cable heat insulation tube 120 at an end of the cable 100, and the superconducting conductor layer 112 and the normal conducting pull-out part 40 are connected to each other. The bushing 20 and the porcelain tube 30 are disposed on the outer circumference of the core 110, and refrigerant layers (regions in which the refrigerants 130 and 132 are contained) and the vacuum layers (the inside vacuum layer 50, the cable-side vacuum layer 60, and the normal-temperature-side vacuum layer 70) are disposed so as to extend from an exposed portion of the core 110 to a cable-side region of the normal conducting pull-out part 40. The components included in the terminal structure 1 will hereinafter be described in order with reference to, mainly, Figure 1.

### ••Cable Core

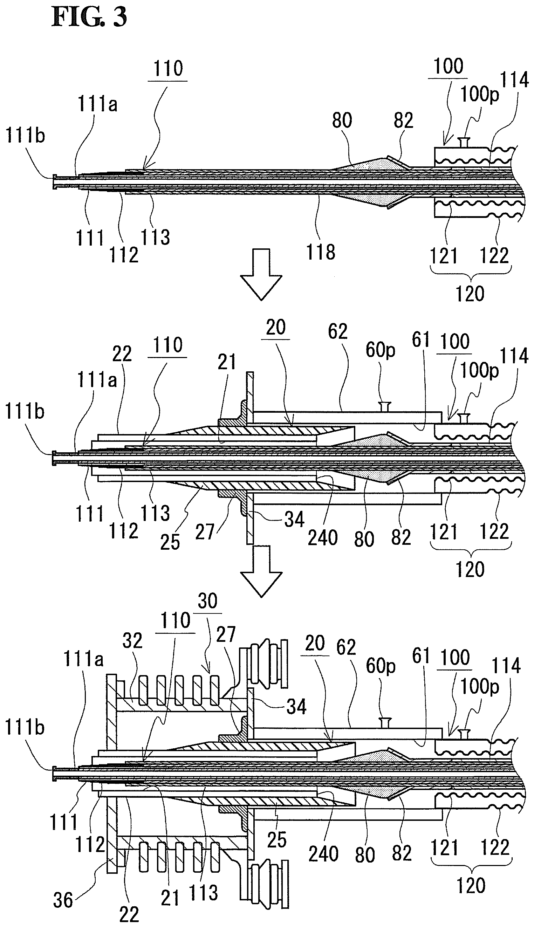

In the cable core 110 exposed from the end of the cable heat insulation tube 120, the shielding layer 114 and the protective layer 115 (Figure 4) are cut near the heat insulation tube 120 (also see the upper part in Figure 3), and the electrical insulation layer 113 is largely exposed at a region nearer the tip than an opening of the heat insulation tube 120. The end portion (portion protruding from the normal-temperature-side end of the bushing) of the core 110 is stripped stepwise and the former 111 and the superconducting conductor layer 112 are exposed in order. In Figure 1 and Figure 3, the protective layer 115 is omitted.

The exposed superconducting conductor layer 112 and the normal conducting pull-out part 40 are joined to each other by using a proper joining material such as solder or brazing material and electrically connected to each other. Specifically, the normal conducting pull-out part 40 has, at an end thereof, an insertion hole into which the end of the cable core 110 is inserted. The end of the cable core 110 is inserted into the insertion hole and the superconducting conductor layer 112 is secured to the inside of the insertion hole by using the joining material.

In the embodiment, a compression connection is made between the former 111 and the normal conducting pull-out part 40. The compression connection, which is a mechanical connection, enables a connection strength between the cable core 110 and the normal conducting pull-out part 40 to be increased. In the embodiment, a metal fixture 111b that is attached to an end portion of the former 111 with a connecting fitting 111a interposed therebetween is disposed and the compression connection is made at the metal fixture 111b, instead of directly connecting the former 111 by compression connection. In the normal conducting pull-out part 40, a region of the insertion hole into which the metal fixture 111b is inserted is a compression connection region.

Welding, for example, may be used for the connection between the former 111 and the connecting fitting 111a and the connection between the connecting fitting 111a and the metal fixture 111b. Examples of the material of which the metal fixture 111b is composed include metals such as copper and a copper alloy, which have excellent compressibility, aluminum, an aluminum alloy, and an iron alloy, for example, stainless steel. In the case where the shape of the outer circumference of the metal fixture 111b is an uneven shape such as a gear shape or a saw blade shape, the normal conducting pull-out part 40 is readily held and a compression connection strength is further increased. A proper metal that enables welding may be used as the material of which the connecting fitting 111a is composed. In the case where the former 111 is composed of a material having excellent compressibility or includes the metal fixture 111b having a shape that enables a hold to be readily kept even when the former 111 has a shape making it difficult to be compressed just like a bellows tube, the above compression connection can be readily made, resulting in excellent processibility. In the case where the connecting fitting 111a is additionally disposed between the former 111 and the metal fixture 111b, the degree of freedom of the material and shape of the metal fixture 111b can be increased.

The connecting fitting 111a may be omitted and the compression connection may be made between the former 111 and the normal conducting pull-out part 40 with only the metal fixture 111b interposed therebetween. In this case, the number of members can be decreased, resulting in excellent processibility. When the former 111 is not a hollow body but a solid body, the connecting fitting 111a and the metal fixture 111b may be omitted, and the former 111 and the normal conducting pull-out part 40 may be directly compressed. Other than these, the former 111 and the normal conducting pull-out part 40 may be joined to each other by using the above joining material.

On the other hand, in a region opposite the above end portion of the cable core 110 exposed from the cable heat insulation tube 120, that is, a region (cable-side region) that is near the end of the heat insulation tube 120 and in which the shielding layer 114 and the protective layer 115 are removed and exposed, a reinforced insulation layer 80 is disposed on the outer circumference thereof. The reinforced insulation layer 80 is formed by spirally winding the above insulating paper around the outer circumference of the core 110 (here, the electrical insulation layer 113). The reinforced insulation layer 80 has a shape tapered from a central portion in the longitudinal direction thereof (vertical direction in Figure 1) toward ends thereof, that is, a shape tapered toward the normal temperature side (upper side in Figure 1) and the cable side (lower side in Figure 1). The inclined portions function as stress cones. A shielding joint 82 is disposed so as to extend from the shielding layer 114 of the core 110 to a cable-side stress cone portion of the reinforced insulation layer 80. The shielding joint 80 is formed by winding a wire made of the above normal conducting material such as copper.

### ••Bushing

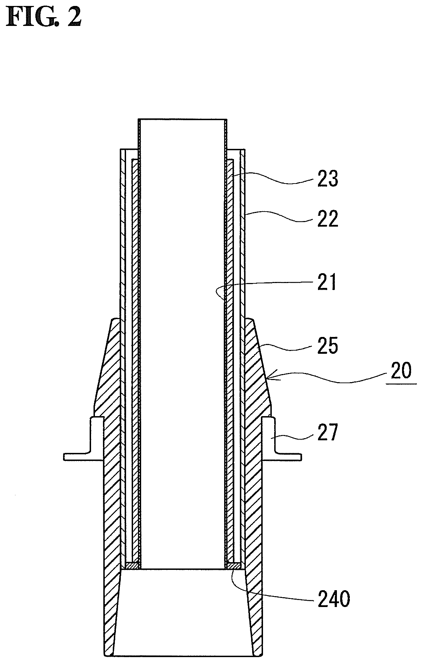

The bushing 20 is disposed around the outer circumference of part of the cable core 110 exposed from the cable heat insulation tube 120, specifically, around the outer circumference of an intermediate portion between the end portion of the core 110 and a portion on which the reinforced insulation layer 80 is disposed. The bushing 20 will be described below in detail with reference to Figure 2. The bushing 20 includes an insulation portion 25 formed into a cylindrical shape and a securing portion 27 that is secured to the porcelain tube 30 (Figure 1). One of the features of the bushing 20 is that the bushing 20 includes a built-in inner tube 21 and a built-in outer tube 22 that form the inside vacuum layer 50 (Figure 1).

The insulation portion 25 provides electrical insulation between the cable core 110 and the outside and performs electric field relaxation. Part of the bushing 20 described in the embodiment is immersed into the refrigerant 130 (Figure 1). Accordingly, the material of which the insulation portion 25 is composed is preferably an insulating material that is usable at a temperature of the refrigerant without any problem. In particular, when the material is fiber-reinforced plastic containing a resin constituent such as an epoxy resin and a reinforcing constituent such as a glass fiber, the material is excellent in terms of strength. A normal-temperature-side region of the insulation portion 25 has a shape tapered toward the normal temperature side (upper side in Figure 2) and an inclined portion thereof functions as a stress cone. A metal foil (not illustrated) concentrically disposed in multi-layers inside the insulation portion 25 enables an electric field to be adjusted. In a cable-side region of the insulation portion 25, on the other hand, the outer circumferential surface thereof is a uniform cylindrical surface and the inner circumferential surface thereof is inclined from the periphery toward the normal temperature side. This inner inclined surface allows the bushing 20 to be disposed such that the bushing 20 surrounds a normal-temperature-side stress cone portion of the reinforced insulation layer 80 at proper intervals (Figure 1). This arrangement enables the bushing 20 and the reinforced insulation layer 80 to relax an electric field well.

The securing portion 27 is joined to the outer circumference of the insulation portion 25 (region that is the central portion in the longitudinal direction and is not the stress cone portion in the embodiment) by using the above resin constituent. The securing portion 27 includes a flange extending outward from the insulation portion 25. The flange is fixed to the porcelain tube 30 (base plate portion 34, Figure 1) by using, for example, a bolt and the bushing 20 can thereby be secured to the porcelain tube 30. The securing portion 27 is also used to seal the porcelain tube 30 and to seal a cable-side refrigerant container 61 (described later, Figure 1) that accommodates a cable-side region of the bushing 20. Examples of the material of which the securing portion 27 is composed include proper metals and resins.

The inner tube 21 and the outer tube 22 are disposed inside the insulation portion 25. The inner tube 21 is used as a flow path that contains the refrigerant 130 for cooling the cable core 110 (particularly, the superconducting conductor layer 112, Figure 1) inserted and disposed inside the inner surface thereof and forms a vacuum space together with the outer tube 22. The insulation portion 25 is disposed on the outer circumferential surface of the outer tube 22 and the outer tube 22 is integrally joined to the insulation portion 25. The inner tube 21 is integrally joined at one end thereof to the outer tube 22 with a connecting member 240 interposed therebetween and is consequently integrally joined to the insulation portion 25.

In the embodiment, the inner tube 21 and the outer tube 22 are flat tubes. In the case of flat tubes, the outer diameter of the insulation portion 25 is more readily decreased compared with the case where corrugated pipes, for example, are used, and this enables downsizing. In addition, the case of flat tubes achieves effects: in the inner tube 21, the flow resistance of the refrigerant 130 is low and the cable core 110 is readily inserted, resulting in excellent processibility; and in the outer tube 22, the insulation portion 25 is readily formed. In the case where the inner tube 21 and the outer tube 22 are corrugated pipes or bellows tubes, the flexibility is excellent but the processibility is poor. A portion of the bushing 20 is not required to excessively bend and there is accordingly no problem even in the case of flat tubes. The materials of which the inner tube 21 and the outer tube 22 are composed include a metal such as stainless steel as described in the section of the former.

The inner tube 21 and the outer tube 22 are disposed so as to extend from the inside of the bushing 20 (insulation portion 25) to the normal temperature side via the inside of the porcelain tube 30. In the embodiment, the inner tube 21 is connected to a normal-temperature-side refrigerant container 71 (described later, Figure 1) that accommodates the cable-side region of the normal conducting pull-out part 40 (Figure 1), and the outer tube 22 is connected to a normal-temperature-side vacuum container 72 (described later, Figure 1) disposed around the outer circumference of the normal-temperature-side refrigerant container 71. In the embodiment, the inner tube 21 is longer than the outer tube 22, and an end of the inner tube 21 protrudes from an end of the outer tube 22. This structure makes it easy to connect the outer tube 22 and the vacuum container 72 to each other after the inner tube 21 and the refrigerant container 71 are connected to each other, resulting in excellent processibility. Because of the above connection, the terminal structure 1 described in the embodiment has a space that communicates from a space between the inner tube 21 and the outer tube 22 to a space between the normal-temperature-side refrigerant container 71 and the normal-temperature-side vacuum container 72.

The space between the inner tube 21 and the outer tube 22 is evacuated, and a vacuum space is formed therebetween. The vacuum space enables the refrigerant 130 to be held while being insulated from heat. In the embodiment, a vacuum space that communicates from the space between the inner tube 21 and the outer tube 22 to the space between the normal-temperature-side refrigerant container 71 and the normal-temperature-side vacuum container 72 is formed.

In the embodiment, a heat insulating material 23 such as super insulation (trade name) is disposed between the inner tube 21 and the outer tube 22, resulting in a higher heat insulation property. In Figure 1 and Figure 3, the heat insulating material 23 is omitted.

The inner tube 21 and the outer tube 22 described in the embodiment do not include the heat insulating material 23 during the stage of an intermediate component before processing and, as illustrated in Figure 2, are formed into a cylindrical shape with a bottom that is opened on one end side (upper side in Figure 2, the normal temperature side) and closed on the other end side (lower side in Figure 2, the cable side). That is, a cable-side end of the inner tube 21 and a cable-side end of the outer tube 22 are connected to each other with the connecting member 240 interposed therebetween in, for example, a factory. The connecting member 240 is an annular plate. The connection can be made by using, for example, welding. The use of welding enables a joint having excellent sealability to be formed. In the case where the inner tube 21 and the outer tube 22 are disposed, and the intermediate component formed into a cylindrical shape with a bottom in a factory is used, handling is easy, transportation to the processing site is easy, and the number of steps in the processing site can be decreased, thereby resulting in excellent processibility. The detailed procedure for processing will be described later.

### ••Cable-Side Heat Insulation Container

Part of the cable core 110 (cable-side region on which the reinforced insulation layer 80 is disposed) exposed from the end of the cable heat insulation tube 120 and the cable-side region of the bushing 20 are accommodated in a cable-side heat insulation container. The cable-side heat insulation container is disposed so as to extend from the end of the heat insulation tube 120 to the base plate portion 34 of the porcelain tube 30 and covers the outer circumference of part of the core 110 and the outer circumference of the cable-side region of the bushing 20 that are located therebetween. More specifically, the cable-side heat insulation container has a cylindrical shape with a bottom in which one end is joined and an opening on the other end side is closed by the base plate portion 34 and includes the cable-side refrigerant container 61 that contains the refrigerant 130 for cooling the core 110 (superconducting conductor layer 112) and a cable-side vacuum container 62 that is disposed so as to cover the outer circumference of the refrigerant container 61. The materials of which these containers 61 and 62 are composed include a metal such as stainless steel as described in the section of the heat insulation tube or the other section.

A space between the cable-side refrigerant container 61 and the cable-side vacuum container 62 is evacuated, and a vacuum space is formed therebetween. The vacuum space enables the refrigerant 130 to be held while being insulated from heat. A heat insulating material (not illustrated) may be disposed between the containers 61 and 62.

One of the features of the terminal structure 1 according to the first embodiment is that the vacuum space between the cable-side refrigerant container 61 and the cable-side vacuum container 62 and the vacuum space between the built-in inner tube 21 and built-in outer tube 22 of the bushing 20 are formed so as to overlap in the longitudinal direction of the cable core 110.

### ••Porcelain Tube

The porcelain tube 30 accommodates a normal-temperature-side region of the bushing 20 and is used to provide electrical insulation between a conductor inserted into the bushing 20 and the outside. One of the features of the terminal structure 1 according to the first embodiment is that the conductor is the superconducting conductor layer 112 of the cable core 110. The porcelain tube 30 described in the embodiment includes a cylindrical body 32 including an insulator, the base plate portion 34, to which the securing portion 27 of the bushing 20 is attached, which is annular and disposed at one end of the body 32, and an annular upper plate portion 36, to which the built-in outer tube 22 of the bushing 20 extending therethrough is secured, which is disposed at the other end of the body 32. An enclosed space (interior space of the porcelain tube 30) surrounded by the body 32, the base plate portion 34, and the upper plate portion 36 contains an insulating fluid (not illustrated) such as an insulating oil or SF₆. An inlet and outlet (not illustrated) for the insulating fluid are formed in, for example, the body 32. The basic structure of the porcelain tube 30 may be a known structure.

### ••Normal Conducting Pull-Out Part

The normal conducting pull-out part 40 is composed of a normal conducting material such as copper, an alloy thereof, aluminum, or an alloy thereof and electrically connected to the superconducting conductor layer 112 exposed at the end portion of the cable core 110. One of the features of the terminal structure 1 of the first embodiment is that a joint between the superconducting conductor layer 112 and the normal conducting pull-out part 40 is disposed outside the porcelain tube 30. In the terminal structure 1 with this structure, a region of the superconducting conductor layer through which electricity runs is a large (long) within a distance up to the normal conducting electric power equipment, and Joule losses are more readily reduced compared with the case where members made of a normal conducting material are interposed or there are many joints between the members.

The normal conducting pull-out part 40 described in the embodiment includes a rod-like conductor joint 42 that is directly connected to the superconducting conductor layer 112 and a rod-like conductor drawer part 44 whose one end is connected to the conductor joint 42 and whose another end is disposed under a normal temperature condition.

The end portion of the cable core 110 (former 111, the connecting fitting 111a, the metal fixture 111b, and the superconducting conductor layer 112 in the embodiment) is inserted into an end of the conductor joint 42. The conductor joint 42 includes an insertion hole having the above compression connection region and a hollow bore 42h in communication with a hollow bore of the former 111. The flow path for the refrigerant 132 is formed so as to be in communication with the hollow bore 42h of the conductor joint 42 from the hollow bore of the former 111. When the former 111 is a solid body, the hollow bore 42h may be omitted. The other end of the conductor joint 42 is an end connected to the conductor drawer part 44. The connection can be made by using mechanical fixing with, for example, a bolt, welding, and so on. When the conductor joint 42 and the conductor drawer part 44 are members independent of each other, the conductor joint 42 can be a relatively short member, and accordingly, the insertion hole and the hollow bore 42h are readily formed, resulting in excellent productivity. When the conductor joint 42 is relatively small, a compression connection is readily made between the former 111 (metal fixture 111b) and the conductor joint 42, resulting in excellent processibility. Other than these, the conductor joint 42 and the conductor drawer part 44 may be continuously integrally joined members.

### ••Normal-Temperature-Side Heat Insulation Container

The normal conducting pull-out part 40 and the joint between the superconducting conductor layer 112 of the cable core 110 and the normal conducting pull-out part 40 are accommodated in a normal-temperature-side heat insulation container. The normal-temperature-side heat insulation container is disposed so as to protrude from the inside of the porcelain tube 30 to the normal temperature side, extends from the joint beyond the conductor joint 42, and covers the outer circumference of part of the conductor drawer part 44. More specifically, the normal-temperature-side heat insulation container includes the normal-temperature-side refrigerant container 71 that contains, for example, the refrigerant 130 for cooling the joint and the normal-temperature-side vacuum container 72 that is disposed so as to cover the outer circumference of the refrigerant container 71. The normal-temperature-side heat insulation container described in the embodiment also includes a terminal vacuum container 752 that is disposed so as to cover most of the outer circumference of the conductor drawer part 44. The normal-temperature-side vacuum container 72 is disposed so as to cover the outer circumference of a cable-side region of the terminal vacuum container 752 that is near the refrigerant 130. In other words, the vacuum containers 72 and 752 include overlapping portions. Examples of the materials of which these containers 71, 72, and 752 are composed include a metal such as stainless steel as described in the section of the heat insulation tube and other sections.

A space between the normal-temperature-side refrigerant container 71 and the normal-temperature-side vacuum container 72 is evacuated, and a vacuum space is formed therebetween. The vacuum space enables, for example, the refrigerant 130 to be held and to be insulated from heat. The inside of the terminal vacuum container 752 is also evacuated, and a vacuum space is formed therein. This vacuum space enables most of the conductor drawer part 44 to be thermally insulated from the outside (normal condition). In particular, in the embodiment, a cable-side region of the conductor drawer part 44 is covered by the two vacuum containers 72 and 752 and accordingly thermally insulated from heat successfully. The above heat insulating materials (not illustrated) may be disposed between the containers 71 and 72 and inside the terminal vacuum container 752.

Other than these, the normal-temperature-side heat insulation container described in the embodiment includes a partition plate 47 that divides the interior of the normal-temperature-side refrigerant container 71. The partition plate 47 divides a refrigerant containing region inside the refrigerant container 71 into an outward path region in which the refrigerant 130 is contained and a return path region in which the refrigerant 132 is contained. The partition plate 47 has a through-hole in a central portion thereof and the conductor joint 42 extending therethrough is secured to the partition plate 47 in a liquid-tight manner. The refrigerant container 71 includes a refrigerant inlet 71i through which the refrigerant 130 is introduced into the outward path region and a refrigerant outlet 71o through which the refrigerant 132 that has passed through the former 111 and the hollow bore 42h and has been poured into the return path region is discharged to the outside. When the former 111 is a solid body, the partition plate 47 may be omitted, or the partition plate 47 may be used as a member for securing the conductor joint 42 and the partition plate 47 may have a through-hole through which the refrigerant 130 flows.

### ••Refrigerant Layer and Vacuum Layer

The terminal structure 1 according to the first embodiment that has the above structure includes the following spaces α to ε as the refrigerant layers and the following spaces A to E as the vacuum layers.

### (Refrigerant Layer)

Inner circumferential space α of the inner tube 121 of the cable heat insulation tube 120
Inner circumferential space β of the refrigerant container 61 of the cable-side heat insulation container
Inner circumferential space γ of the cable-side region of the bushing 20
Inner circumferential space δ of the built-in inner tube 21 of the bushing 20
Inner circumferential space ε of the refrigerant container 71 of the normal-temperature-side heat insulation container

### (Vacuum Layer)

Space A between the inner tube 121 and outer tube 122 of the cable heat insulation tube 120
Space B between the refrigerant container 61 and vacuum container 62 of the cable-side heat insulation container
Space Γ between the built-in inner tube 21 and built-in outer tube 22 of the bushing 20
Space Δ between the refrigerant container 71 and vacuum container 72 of the normal-temperature-side heat insulation container
Space E inside the terminal vacuum container 752

The spaces α to ε forming the refrigerant layers described in the embodiment are space that are in communication with each other. Accordingly, in the case where the refrigerant 130 is introduced from the refrigerant inlet 71i of the normal-temperature-side heat insulation container, a refrigerant flow path (outward path) can be formed so as to extend from the outward path region (part of space ε) of the normal-temperature-side refrigerant container 71 that is divided by the partition plate 47 to the cable heat insulation tube 120 (space α) of the superconducting cable 100 via the built-in inner tube 21 (space δ) of the bushing 20, an end (space γ) of the bushing 20, and the cable-side refrigerant container 61 (space β).

The vacuum space A is referred to as a cable vacuum layer, the vacuum space Γ as the inside vacuum layer 50, the vacuum space B as the cable-side vacuum layer 60, the vacuum space Δ as the normal-temperature-side vacuum layer 70, and the vacuum space E as a terminal vacuum layer 75. In particular, in the embodiment, the cable vacuum layer and the cable-side vacuum layer 60 are disposed so as to partially overlap, and the inside vacuum layer 50 and the cable-side vacuum layer 60 are disposed so as to partially overlap. In addition, the normal-temperature-side vacuum layer 70 and the terminal vacuum layer 75 are disposed so as to partially overlap. Thus, in the case where the vacuum layers are disposed so as to partially overlap, the vacuum heat insulation property of the terminal structure 1 can be improved. In the case where the inside vacuum layer 50 and the cable-side vacuum layer 60 that are located inside and outside the bushing 20 overlap in the longitudinal direction of the cable core 110, the normal-temperature-side region of the bushing 20 that is disposed inside the porcelain tube 30 is readily thermally insulated from the cable-side region that is immersed into the refrigerant 130. Accordingly, the normal-temperature-side region of the bushing 20 is successfully thermally insulated and a failure (such as the occurrence of frost) due to excess cooling by the refrigerant 130 can be prevented, although the cable-side region of the bushing 20 is cooled by the refrigerant 130. For example, the resin constituent of which the insulation portion 25 of the bushing 20 is composed has typically poor thermal conductivity, it is difficult for the insulation portion 25 itself to be a thermal pass, and the amount of thermal conduction (cold heat) from the cable-side region to the normal-temperature-side region via the insulation portion 25 is low. In particular, in the case where the cable-side refrigerant container 61 is made of a metal, and the outer circumferential surface of the bushing 20 is formed of a metallic layer, since the inner circumferential surface of the container 61 and the outer circumferential surface of the bushing 20 are made of metals, a structure in a bayonet manner, as it is called, can be used and a space therebetween can be made extremely narrow. In this case, gas vaporized from the refrigerant 130 is contained in the narrow space, a thermal insulation portion between a liquid phase and a gas phase can be formed, and the bushing 20 can be further prevented from being excessively cooled. Other than these, in the case where the conductor drawer part 44 is covered by a double vacuum layer, the amount of heat penetration via the conductor drawer part 44 can be effectively decreased, although an end of the conductor drawer part 44 is exposed to the normal condition.

### •Method of Manufacturing Terminal Structure for Superconducting Cable

The terminal structure 1 for a superconducting cable according to the first embodiment above described can be formed by a manufacturing method including, for example, the following steps: a step of processing the core, a step of forming the cable-side heat insulation container, a step of preparing the bushing, a step of disposing the porcelain tube, a step of connecting the core and the normal conducting pull-out part, a step of forming the normal-temperature-side heat insulation container, and an evacuating step. The steps will be described below one by one with reference to, mainly, Figure 2 and Figure 3.

### ••Step of Processing Core

The cable core 110 is exposed with a predetermined length from the cable heat insulation tube 120 at an end of the superconducting cable 100 by, for example, being stripped stepwise to expose the former 111, the superconducting conductor layer 112, the electrical insulation layer 113, and so on in order (see the upper part in Figure 3). In the embodiment, the metal fixture 111b is connected to an end of the former 111 with the connecting fitting 111a interposed therebetween. In the embodiment, after the reinforced insulation layer 80 is formed on the core 110 near the heat insulation tube 120, the shielding joint 82 is disposed so as to extend from the shielding layer 114 to part of the outer circumference of the reinforced insulation layer 80.

### ••Step of Forming Cable-Side Heat Insulation Container

The cable-side heat insulation container is disposed so as to cover the reinforced insulation layer 80 of the cable core 110 (see the middle part in Figure 3). Here, the refrigerant container 61 is first formed such that part of the outer tube 122 of the cable heat insulation tube 120 and part of the cable-side refrigerant container 61 overlap in the longitudinal direction of the core 110, as described above. The outer tube 122 of the heat insulation tube 120 and the refrigerant container 61 are secured to each other by, for example, welding. After the heat insulating material (not illustrated) is appropriately disposed on the outer circumference of the refrigerant container 61, the cable-side vacuum container 62 is formed. The base plate portion 34 of the porcelain tube 30 is attached so as to close an opened end of the cable-side heat insulation container.

### ••Step of Preparing Bushing

In the embodiment, the inner tube 21 and the outer tube 22 are formed into a cylindrical shape with a bottom by using the connecting member 240 and an intermediate component including the insulation portion 25 on the outer circumference of the outer tube 22 is manufactured in, for example, a factory. The heat insulating material 23 in a sheet shape is wound into a cylindrical shape in the processing site, and this cylindrical body is inserted from an opening of the cylindrical body with the bottom that includes the inner tube 21 and the outer tube 22 to form the bushing 20 including the heat insulating material 23 (Figure 2). The cylindrical heat insulating material 23 is in contact with and stopped by the connecting member 240 and is held in the bushing 20. The bushing 20 including the heat insulating material 23 is engaged with the outside of the cable core 110 (see the middle part in Figure 3). The lengths of the inner tube 21 and outer tube 22 of the bushing 20 are adjusted to such an extent that an end of the core 110 (here, the metal fixture 111b) is exposed. In this way, the later-described operation of connecting the superconducting conductor layer 112 and the normal conducting pull-out part 40 (Figure 1) is readily performed and the core 110 can be used as a guide in this insertion operation. The insertion operation is performed until the securing portion 27 included in the bushing 20 comes in contact with the base plate portion 34. That is, the securing portion 27 comes in contact with and stopped by the base plate portion 34. Through the insertion operation, the cable-side region of the bushing 20 is covered by the cable-side heat insulation container. The securing portion 27 of the bushing 20 is secured to the base plate portion 34.

### ••Step of Disposing Porcelain Tube

The porcelain tube 30 is disposed so as to cover the normal-temperature-side region of the bushing 20 (see the lower part in Figure 3). In the embodiment, the body 32 and the upper plate portion 36 are disposed to connect the base plate portion 34, the body 32, and the upper plate portion 36 to each other. The porcelain tube 30 is disposed such that the end of the cable core 110 (here, the metal fixture 111b) and the ends of the built-in inner tube 21 and built-in outer tube 22 of the bushing 20 protrude from the upper plate portion 36. The insulating fluid may be introduced into the inside of the porcelain tube 30 at an appropriate time.

### ••Step of Connecting Core and Normal Conducting Pull-Out Part

The normal conducting pull-out part 40 is prepared, the end of the cable core 110 is inserted into the insertion hole of the conductor joint 42 (Figure 1), and the superconducting conductor layer 112 and the normal conducting pull-out part 40 are electrically connected to each other. In the embodiment, a compression connection is made between the metal fixture 111b connected to the former 111 and part of the conductor joint 42, and the core 110 and the normal conducting pull-out part 40 are mechanically connected to each other. Since the end of the core 110 protrudes from the porcelain tube 30 (upper plate portion 36), insertion of the conductor joint 42, pour or application of a joining material such as solder, and a connecting process such as the compression connection can be readily performed. In the case where the conductor joint 42 and the conductor drawer part 44 can be attached and detached, just like the embodiment, when the conductor joint 42 and the conductor drawer part 44 are connected to each other after the above connecting process is finished, it is only necessary to handle only the conductor joint 42, resulting in excellent processibility. The conductor joint 42 and the conductor drawer part 44 may be connected to each other in advance in a factory or the processing site.

### ••Step of Forming Normal-Temperature-Side Heat Insulation Container

The normal-temperature-side heat insulation container is formed so as to cover the normal conducting pull-out part 40 and the joint between the superconducting conductor layer 112 and the normal conducting pull-out part 40. In the embodiment, the normal-temperature-side refrigerant container 71 is first formed after the partition plate 47 is attached to the outer circumference of the conductor joint 42. One end of the refrigerant container 71 is connected to the built-in inner tube 21 of the bushing 20 that protrudes from the upper plate portion 36 of the porcelain tube 30. The terminal vacuum container 752 is subsequently formed so as to close the other end of the refrigerant container 71 and then the normal-temperature-side vacuum container 72 is formed. An end of the vacuum container 72 is connected to the built-in outer tube 22 of the bushing 20 that protrudes from the upper plate portion 36 of the porcelain tube 30.

### •• Evacuating Step

Evacuation is performed by using vacuum ports 60p, 70p, and 75p that are respectively included in the cable-side vacuum container 62, the normal-temperature-side vacuum container 72, and the terminal vacuum container 752. Through this step, the cable-side vacuum layer 60, the inside vacuum layer 50, the normal-temperature-side vacuum layer 70, and the terminal vacuum layer 75 can be formed. In the case where the space Γ between the inner tube 21 and outer tube 22 of the bushing 20 and the space Δ of the normal-temperature-side vacuum container 72 are in communication with each other as described above, evacuation from the vacuum port 70p enables the inside vacuum layer 50 and the normal-temperature-side vacuum layer 70 to be formed at the same time. The evacuation may be performed every time the above containers are formed. However, when the evacuation is performed at the same time, preparation of a vacuum apparatus, for example, is necessary only once, resulting in excellent processibility. The cable heat insulation tube 120 may be subjected to the evacuation in advance in, for example, a factory. The state of vacuum can be adjusted in the processing site or after placement by using a vacuum port 100p included in the cable heat insulation tube 120. With Regard to the vacuum layers 60, 50, 70, and 75, the state of vacuum can be adjusted after placement by using the vacuum ports 60p, 70p, and 75p. In other words, the state of vacuum can be managed over time.

After the above steps are finished, the refrigerant 130 is introduced to maintain the superconducting conductor layer 112 in the superconducting state, a superconducting cable line can thereby be operated, and electric power can be transferred between the superconducting cable line and normal conducting electric power equipment.

### •Effect

The terminal structure 1 for a superconducting cable according to the first embodiment directly connects the cable core 110 of the superconducting cable 100 and the normal conducting pull-out part 40 to each other, does not include the above intervening members including the superconducting wire nor the body case that accommodates these, and is small. Although the terminal structure 1 includes the bushing 20 independent of the core 110, the terminal structure 1 enables the outer diameter of the bushing 20 to be smaller than the outer diameter in the case where the insulation portion 25 is directly disposed on the outer circumference of the cable heat insulation tube 120, and the terminal structure 1 is small.

In addition, the terminal structure 1 for a superconducting cable according to the first embodiment is excellent in terms of processibility for the following reasons. (1) The terminal structure 1 does not include the above intervening members and body case and there are fewer connecting steps and fewer assembling steps in the processing site. (2) The terminal structure 1 includes no large components, such as the above body case, but includes relatively small components that are easy to handle. (3) The joint between the superconducting conductor layer 112 and the normal conducting pull-out part 40 is disposed outside the porcelain tube 30, and accordingly, the connection between the superconducting conductor layer 112 and the normal conducting pull-out part 40 and the above compression connection are readily made. In particular, the terminal structure 1 described in the embodiment is excellent in terms of processibility also for the following reasons. (4) The inside vacuum layer 50 and the normal-temperature-side vacuum layer 70 are spaces that are in communication with each other, the evacuation can be performed at the same time, and hence the number of the evacuating steps is small. (5) The heat insulating material 23 can be readily accommodated in a space between the inner tube 21 and the outer tube 22 even in the processing site, although the heat insulating material 23 is disposed on the outer circumference of the built-in inner tube 21 of the bushing 20.

### [Second Embodiment]

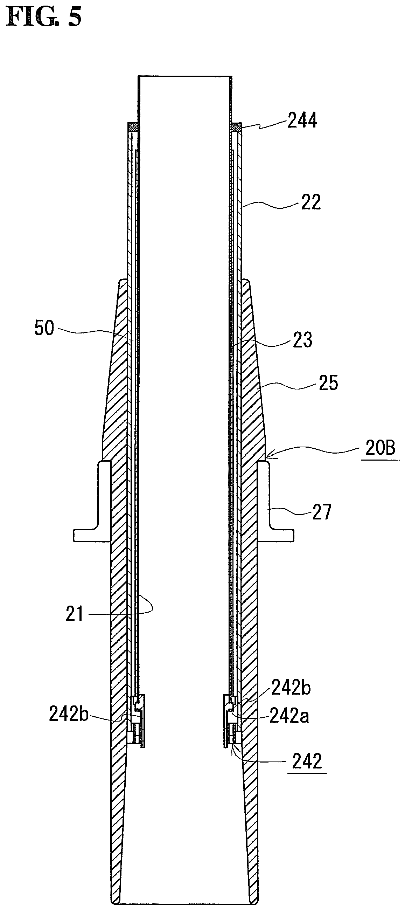

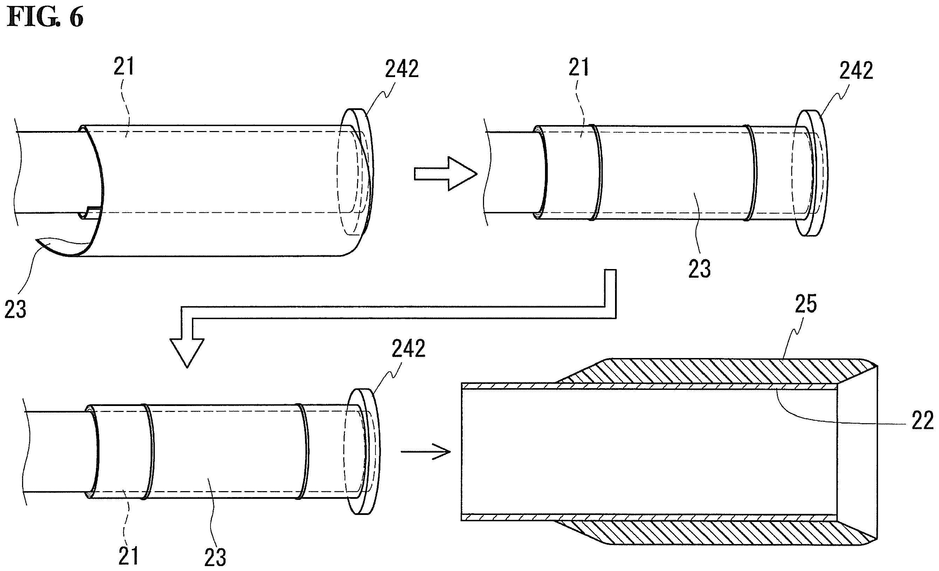

In an example described in the first embodiment, an enclosed space is formed of an enclosed space (inside vacuum layer 50) defined by the built-in inner tube 21 and built-in outer tube 22 of the bushing 20 in communication with an enclosed space (normal-temperature-side vacuum layer 70) formed in the normal-temperature-side heat insulation container. In an example described in the first embodiment, the intermediate component in which the inner tube 21 and the outer tube 22 are formed in a cylindrical shape with a bottom is used. Alternatively, the intermediate component in a cylindrical shape with a bottom may not be used, and the inner tube 21 and the outer tube 22 may be connected to each other in the processing site to form the enclosed space defined by the inner tube 21 and the outer tube 22 and the enclosed space formed in the normal-temperature-side heat insulation container that are independent of each other. In a terminal structure for a superconducting cable according to a second embodiment, an enclosed space that forms the inside vacuum layer 50 is formed by using an intermediate component different from the intermediate component in the first embodiment, and the above independent enclosed spaces are formed. The differences (intermediate component, the procedure for processing, and the enclosed spaces) from the terminal structure according to the first embodiment will be described below in detail with reference to Figure 5 and Figure 6. The description of the other structures and effects is omitted.

The terminal structure according to the second embodiment includes a bushing 20B illustrated in Figure 5. The bushing 20B includes the insulation portion 25 composed of, for example, fiber-reinforced plastic, the securing portion 27 attached to the porcelain tube 30 (Figure 1), the inner tube 21 through which the cable core 110 (Figure 1) extends, and the outer tube 22 on which the insulation portion 25 is formed, as in the bushing 20 included in the terminal structure according to the first embodiment. The inner tube 21 is integrally joined at one end thereof to one end of the outer tube 22 with a connecting member 242 interposed therebetween, is integrally joined to the other end of the outer tube 22 with another connecting member 244 interposed therebetween, and is consequently integrally joined to the insulation portion 25. An end of the inner tube 21 is connected to the normal-temperature-side refrigerant container 71 (Figure 1). The normal-temperature-side vacuum container 72 (Figure 1), on the other hand, includes an extension (not illustrated) extending to the outer tube 22, and the extension is connected to the outer tube 22.

In this embodiment, one connecting member 242 includes a member disposed on the inner tube 21 and a member disposed on the outer tube 22. The connecting member 242 includes an annular seal hole 242a formed by combining, for example, grooves formed on the members and screw portions 242b at which the members are joined with screws. In this embodiment, the connecting member 242 includes the plural screw portions 242b. An annular metallic seal material (not illustrated) is disposed at the seal hole 242a. The other connecting member 244 is an annular plate as in the connecting member 240 according to the first embodiment and is connected to the tubes 21 and 22 by, for example, welding. The space between the inner tube 21 and the outer tube 22 is closed by the connecting members 242 and 244, and the enclosed space can be formed in the tubes 21 and 22 by, for example, a metallic seal material or welding. The enclosed space is evacuated, and the terminal structure according to the second embodiment includes the inside vacuum layer 50. The heat insulating material 23 is disposed between the tubes 21 and 22.

The intermediate component that does not include the inner tube 21 but includes only the insulation portion 25, the securing portion 27, and the outer tube 22 to which the connecting member 242 (a part) is joined by, for example, welding is used to form the terminal structure according to the second embodiment. Steps until the inside vacuum layer 50 is formed in the processing site by using the intermediate component (that has been manufactured in, for example, a factory) are described below with reference to Figure 6. In Figure 6, illustration of the connecting member 242 is simplified.

As illustrated in Figure 6, the connecting member 242 joined to the outer circumferential surface of the inner tube 21 at an appropriate position by, for example, welding is prepared. The heat insulating material 23 in a sheet shape is appropriately wound around the outer circumference of the inner tube 21 (see the upper left part in Figure 6). Since the connecting member 242 is disposed so as to protrude outward from the inner tube 21, movement of the heat insulating material 23 in the axial direction can be restricted. The heat insulating material 23 that is wound, however, may be secured by using a proper binder (see the upper right part in Figure 6). The inner tube 21 including the heat insulating material 23 is inserted into the outer tube 22, and the inner tube 21 and the outer tube 22 are connected to each other at an appropriate position of the outer tube 22 by using the connecting member 242. Here, the inner tube 21 and the outer tube 22 can be readily connected by rotating the inner tube 21 or the outer tube 22 to join the screw portions 242b (Figure 5). When the screw portions 242b are joined, the metallic seal material disposed at the seal hole 242a causes the inner tube 21 and the outer tube 22 to be airtight. The connecting member 244 is subsequently connected, and this enables the inner tube 21 and the outer tube 22 to be sealed. The enclosed space formed between the inner tube 21 and the outer tube 22 is evacuated by using a vacuum port (not illustrated) formed in, for example, the outer tube 22. Through this step, the inside vacuum layer 50 can be formed.

The terminal structure according to the second embodiment has easy operations and is excellent in terms of processibility, although the intermediate component that integrally joins the outer tube 22 and the inner tube 21 that are included in the bushing 20B to each other is used in the processing site. In addition, the use of the intermediate component enables the inside vacuum layer 50 and the normal-temperature-side vacuum layer 70 (Figure 1) to be independent spaces that are not in communication with each other and enables the degree of freedom of design to be increased. In the case where the normal-temperature-side vacuum container 72 is formed into an appropriate shape and connected to the outer tube 22, as described above, the vacuum layer can be disposed on the outer circumference of the refrigerant layer in the inner tube 21 without communication. The connecting member 244 may be omitted to form the vacuum spaces that are in communication with each other as in the first embodiment.

The present invention is not limited to the embodiments. The present invention is shown by the scope of claims and includes all modifications having the same content and range as the scope of claims. For example, the present invention can be applied to a multi-core package type cable.

### Industrial Applicability

The terminal structure for a superconducting cable according to the present invention can be used as a joint between a superconducting cable and normal conducting electric power equipment (representatively, a normal conducting cable) that is disposed under a normal temperature condition.

### Reference Signs List

1 terminal structure for a superconducting cable
20, 20B bushing 21 inner tube 22 outer tube 23 heat insulating material
240, 242, 244 connecting member 242a seal hole
242b screw portion
25 insulation portion 27 securing portion
30 porcelain tube 32 body 34 base plate portion 36 upper plate portion
40 normal conducting pull-out part 42 conductor joint 42h hollow bore
44 conductor drawer part
47 partition plate
50 inside vacuum layer
60 cable-side vacuum layer 61 cable-side refrigerant container
62 cable-side vacuum container
70 normal-temperature-side vacuum layer 71 normal-temperature-side refrigerant container 72 normal-temperature-side vacuum container
71i refrigerant inlet 71o refrigerant outlet 75 terminal vacuum layer
752 terminal vacuum container
80 reinforced insulation layer 82 shielding joint
60p, 70p, 75p, 100p vacuum port
100 superconducting cable 110 cable core
111 former 111a connecting fitting 111b metal fixture
112 superconducting conductor layer 113 electrical insulation layer 114 shielding layer
115 protective layer
118 intervening layer 118a metallic tape layer 118b cushion layer
120 cable heat insulation tube 121 inner tube 122 outer tube
124 corrosion protection layer
130, 132 refrigerant

## Claims

1. A terminal structure for a superconducting cable comprising: a cable core exposed from an end of a heat insulation tube at an end of the superconducting cable;
a bushing through which part of the cable core extends;
a porcelain tube accommodating a normal-temperature-side region of the bushing; a normal conducting pull-out part to which a superconducting conductor layer included in the cable core is connected at an end of the cable core that protrudes from a normal-temperature-side end of the bushing;
an inside vacuum layer that is disposed so as to extend from a space between an inner circumference of the bushing and an outer circumference of the cable core to a normal temperature side via an inside of the porcelain tube and that holds a refrigerant for cooling the superconducting conductor layer of the cable core while insulating the refrigerant from heat;
a cable-side vacuum layer that is disposed so as to extend from an outer circumference of a cable-side region of the bushing to the end of the heat insulation tube, that holds the refrigerant for cooling the superconducting conductor layer of the cable core while insulating the refrigerant from heat, and that is disposed so as to overlap the inside vacuum layer; and
a normal-temperature-side vacuum layer that holds a refrigerant for cooling a joint between the superconducting conductor layer and the normal conducting pull-out part that is disposed outside the porcelain tube while insulating the refrigerant from heat.

2. The terminal structure for a superconducting cable according to Claim 1, comprising: an outer tube on which an insulating material of the bushing is disposed; and an inner tube that forms a vacuum space of the inside vacuum layer between the inner tube and the outer tube and that contains the refrigerant,
wherein a cable-side end of the outer tube and a cable-side end of the inner tube are connected to each other so that a cylindrical shape with a bottom is formed.

3. The terminal structure for a superconducting cable according to Claim 1 or Claim 2, wherein the inside vacuum layer and the normal-temperature-side vacuum layer are in communication with each other.

4. The terminal structure for a superconducting cable according to any one of Claims 1 to 3, comprising: a reinforced insulation layer disposed on an outer circumference of a cable-side region of the cable core.
